# EUROPÄISCHE PATENTSCHRIFT

(11) **EP 2 719 615 B1**
(45) Veröffentlichungstag und Bekanntmachung des Hinweises auf die Patenterteilung: **07.09.2016**
(21) Anmeldenummer: 13004782.2
(22) Anmeldetag: 04.10.2013
(51) Int. Cl.: B62M 9/10

(54) **Befestigungseinrichtung**
Fixing device
Dispositif de fixation

(30) Priorität: 12.10.2012 DE 102012020563
(43) Veröffentlichungstag der Anmeldung: 16.04.2014
(73) Patentinhaber: SRAM Deutschland GmbH, 97424 Schweinfurt (DE)
(72) Erfinder: Florczyk, Raymond, 97509 Kolitzheim/OT Stammheim (DE); Hölle, Philipp, 97424 Schweinfurt (DE)

(56) Entgegenhaltungen:
- EP-A1- 0 607 095
- EP-A1- 2 463 188
- EP-A2- 1 342 657
- EP-A2- 1 964 769

## Beschreibung

Die Erfindung betrifft eine Einrichtung zur Befestigung eines Mehrfach-Kettenrades auf einer Nabe eines Hinterrades eines Fahrrades. Dabei weist das Mehrfach-Kettenrad unterschiedlich große Zahnkränze zur Aufnahme einer Kette und zur Übertragung einer von der Kette eingeleiteten Umfangkraft auf die Nabe auf, mit der Möglichkeit, die Kette durch eine Schalteinrichtung von einem auf einen anderen Zahnkranz zu wechseln.

Bei Mehrfach-Kettenrädern der herkömmlichen Art wird eine Kassette, bestehend aus einer Vielzahl von Zahnkränzen mit unterschiedlichen Durchmessern auf einem Antreiber einer Nabe angeordnet. Die Zähne eines jeden Zahnkranzes kommen beim Betätigen der Schalteinrichtung abwechselnd in Eingriff mit der Kette und übertragen ein Drehmoment aus den Pedalkräften des Fahrers auf den Antreiber über ein Profil, das die Zahnkränze mit dem Antreiber drehfest verbindet. Jeder dieser Zahnkränze überträgt also individuell das Drehmoment auf den Antreiber, wodurch es sowohl im Bereich der Mitnahme am Profil des Mitnehmers, wie auch am Zahnkranz wegen derseitlich wirkenden Kräfte durch die meist nicht fluchtende Kette stärker und schwerer ausgebildet sein muss.

Zur Erfüllung unterschiedlicher Anforderungen, zum Beispiel im Radrennsport, nach einer immer leichteren Bauweise, oder infolge gestiegener Genauigkeitsanforderung in Verbindung mit einer weiteren Erhöhung der Anzahl der Gangstufen, ist der Ansatz zu einer einstückigen Bauweise von Mehrfach-Ritzelanordnungen umgesetzt worden.

So ist aus der EP 1 972 539 eine Mehrfach-Ritzelanordnung bekannt geworden, bei der die Einzelritzel in einer konischen Stützstruktur angeordnet sind, bei der sich rohrförmige Abschnitte und scheibenförmige Abschnitte treppenförmig abwechseln und bei der die Einzelritzel durch einen scheibenförmigen Abschnitt und an dessen Peripherie angeordneten Zähnen zum Eingriff mit der Rollenkette gebildet sind. Die Stützstruktur lässt sich mit sehr geringer Wandstärke ausbilden, die vor allem durch die Fertigungstoleranzen nach unten begrenzt ist.

In der EP 1 342 657 A2, welche die Präambel des Anspruchs 1 offenbart, ist eine Mehrfach-Ritzelanordnung gezeigt, die eine Drehbegrenzungsvorrichtung aus Drehbegrenzern an den Ritzeln zeigt.

Bei Mehrfach-Ritzelanordnungen, die aus Einzelritzeln bestehen, sind die einzelnen Ritzel auch jedes für sich drehfest mit dem Antreiber verbunden. Dazu dienen Drehmoment übertragende Verzahnungen, die eine formschlüssige Verbindung zwischen dem einzelnen Ritzel und dem Antreiber herstellen. Darüber hinaus können mehrere benachbarte Einzelritzel durch Schrauben miteinander zu einem Ritzelpaket verbunden sein, wobei Distanzringe für die Einhaltung eines definierten Abstandes in axialer Richtung zwischen den Einzelritzeln sorgen. Dadurch wird erleichtert, ein Ritzelpaket auf die Verzahnung aufzuschieben, was im Fall des Verschleißes der Verzahnung an den Ritzeln und der Notwendigkeit des Austausches mit neuen Ritzeln notwendig wird. Dabei kommt dem kleinsten Einzelritzel eine besondere Aufgabe in Hinsicht auf die sichere Fixierung auf dem Antreiber zu.

Zur axialen Fixierung des Ritzelpaketes wird jeweils eine Befestigungsschraube eingesetzt, die mit ihrem Außengewinde in ein Innengewinde am Antreiber eingeschraubt wird. Werkzeugflächen an der Befestigungsschraube dienen dem Eingriff eines Werkzeuges, um sowohl zum Festziehen, als auch zum Lösen der Befestigungsschraube ein Drehmoment auf die Befestigungsschraube aufbringen zu können.

Im Antriebsfall drehen sich der Antreiber und das Ritzelpaket unter der mit gleichbleibendem Ablaufwinkel am Ritzel angreifenden Kette hindurch, und es ändert sich am Verbund von Antreiber und Ritzel ständig der Kraftangriffspunkt der Kettenzugskraft am Ritzelpaket.

den Antreiber möglich ist. Bei der Drehbewegung des Ritzelpaketes gegenüber dem Antreiber rollt das Ritzelpaket deshalb an der Außenumfangsfläche des Antreibers ab und neigt dabei dazu, sich um einen geringeren Winkel zu drehen als der Antreiber. Infolge der Drehbehinderung zwischen Ritzelpaket und Antreiber durch Eingriffsvorsprünge am Ritzelpaket kommt es zu einer hin und her gehenden Walkbewegung des Ritzelpaketes gegenüber dem Antreiber. Diese Walkbewegung kann zum Lösen der Befestigungsschraube beitragen, wodurch sich die Befestigungsschraube los dreht und keine gewünschte Verbindung zwischen Ritzelpaket und Antreiber mehr aufrechterhalten wird. Als Gegenmaßnahme haben sich Rändelelemente sowohl an der Befestigungsschraube, als auch am kleinsten Ritzel bewährt, die mit einer radialen Erstreckung in Bezug auf die Drehachse der Ritzel angeordnet sind und infolge der axialen Vorspannung zwischen einer Anlage am Antreiber einerseits und dem Kopf der Befestigungsschraube andererseits ineinander greifen. Kommt es nun zu einer Walkbewegung des kleinsten Ritzels gegenüber dem Antreiber in den Grenzen, die von der Verzahnung vorgegeben sind, kann sich die Befestigungsschraube nicht mehr lösen. Vielmehr bewegt sie sich gemeinsam mit der hin und her gehenden Bewegung der kleinsten Ritzel bei der genannten Walkbewegung, weil die Rändelung eine weiter gehende Bewegung zwischen kleinstem Ritzel und Befestigungsschraube unterbindet.

Die einzelnen Rändelelemente sind radial ausgerichtet, entsprechend der zu behindernden Drehbewegung zwischen kleinstem Ritzel und Befestigungsschraube. Bei einem mittels Stanzen und Umformen hergestellten kleinsten Ritzel werden die Formelemente mit eingeprägt, wozu komplementäre Formelemente an den entsprechenden Prägewerkzeugen vorhanden sind. Die Herstellung der Formelemente erfolgt gewissermaßen nebenbei, ohne die Durchführung von zusätzlichen, die Herstellkosten negativ beeinflussenden Bearbeitungsschritten.

Anders verhält es sich bei Ritzelpaketen, die durch spanende Herstellungsverfahren entstehen. Dann werden zunächst durch Drehbearbeitungsschritte und nachfolgende Fräsoperationen formgebende Arbeitsschritte durchgeführt, bei denen nicht nebenbei auch noch die Formelemente der Rändelverzahnung entstehen können. Vielmehr müssten weitere, zusätzliche Bearbeitungsschritte erfolgen, mit zusätzlichen Bearbeitungszeiten und Bearbeitungskosten. Besonders nachteilig wirkt sich hierbei aus, dass die Formelemente der Rändelverzahnung infolge ihrer radialen Ausrichtung eben gerade nicht einer Fräsoperation, und erst recht nicht den Möglichkeiten einer Drehbearbeitung entgegen kommen.

Es besteht somit die Aufgabe für ein Ritzelpaket, das durch spanende Herstellverfahren entsteht, eine kostengünstige Möglichkeit für das Vorsehen einer drehfesten Verbindung zwischen Befestigungsschraube und Ritzelpaket vorzusehen. Gelöst wird diese Aufgabe durch das Aufspalten des Ritzelpaketes in mindestens zwei Komponenten, nämlich in ein separates Ringelement neben dem schon vorhandenen Ritzelpaket. Diese zwei Komponenten werden mittels Drehkoppelelementen drehfest miteinander gekoppelt, wobei an einer der Komponenten eine Rändelverzahnung ausgebildet ist, die nicht im Rahmen der spanenden Bearbeitung des Ritzelpaketes mit eingearbeitet werden muss, sondern mit Hilfe von kostengünstigeren Verfahren, wie zum Beispiel mit einem Prägevorgang.

Die Herstellung der genannten Rädelelemente, die als Drehkoppelelemente wirken, bedingt zwar auch zusätzliche Herstellkosten. Es hat sich aber herausgestellt, dass diese Kosten gegenüber der Herstellung der Rändelverzahnung mit spanenden Herstellungsverfahren, die in Hinsicht auf die Bearbeitung des Ritzelpaketes optimiert sind, geringer ausfallen. Es ist somit auch nicht ausgeschlossen, die Rändelverzahnung selbst an einer gegenüber dem Ritzelpaket abgespalteten Komponente mit einem für diese Komponente optimierten Zerspanungsvorgang durchzuführen, weil es in allererster Linie auf die Aufspaltung in mehrere Komponenten ankommt, die jeweils für sich allein optimiert bearbeitet werden können.

Eine Riffelung an einem Ringelement für einen Zahnkranz für ein Fahrrad ist in der FR 1 195 874 gezeigt.

Scheiben mit Wülsten mit unterschiedlicher Ausrichtung an einer Klemmstelle für einen Seilzug an einem Fahrrad sind in der EP 0 766 014 offenbart.

Die erfindungsgemäße Lösung wird im Folgenden am Beispiel einer bevorzugten Ausführungsform beschrieben.
Fig. 1 zeigt ein einstückiges Ritzelpaket, das mittels spanender Herstellungsverfahren entstanden ist und für die Anwendung der erfindungsgemäßen Lösung vorgesehen ist.
Fig. 2 zeigt die erfindungsgemäße Ausbildung einer Ritzelanordnung in Verbindung mit einem Ringelement mit Rändelelementen.
Fig. 3 zeigt eine bevorzugte Ausführungsform eines erfindungsgemäßen Ringelementes mit Rändeln.
Fig. 4 zeigt Details einer bevorzugten Ausführungsform eines erfindungsgemäßen Ringelementes mit Rändeln.

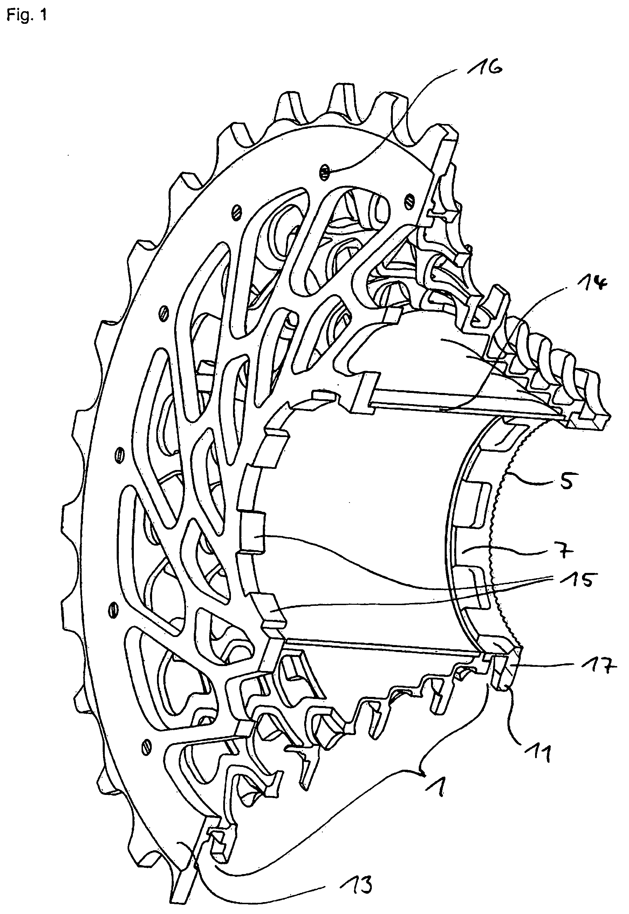

In Fig. 1 ist eine Anordnung von einem einstückigen Ritzelpaket 1, einer Abschluss-Scheibe 13, einer Distanzhülse 14 und einem separaten kleinsten Ritzel 17 gezeigt, die auf einem nicht dargestellten Antreiber einer Fahrrad-Hinterradnabe drehbar gegenüber der ebenfalls nicht dargestellten Nabenachse angeordnet ist. Zum Zweck der Drehkopplung greifen sowohl Eingriffsvorsprünge 15 an der Abschluss-Scheibe 13, als auch erste Drehbegrenzer 7 am kleinsten Ritzel 17 in am Antreiber vorgesehene Vertiefungen ein. Ebenfalls zur Drehkopplung greifen Eingriffsstifte 16 am Ritzelpaket 1 in entsprechende Bohrungen an der Abschluss-Scheibe 13 ein. Durch eine nicht dargestellte Befestigungsschraube, in der Figur rechts vom kleinsten Ritzel 17 anzuordnen, werden das kleinste Ritzel 17, das Ritzelpaket 1, die Distanzhülse 14 und die Abschluss-Scheibe 13 gegen einen axialen Bund des Antreibers vorgespannt. Dabei wird eine treppenförmig Tragstruktur des Ritzelpaketes 1 axial leicht komprimiert, bis die Distanzhülse 14 nach Aufbrauchen eines axialen Spieles mit dem kleinsten Ritzel 17 und der Abschluss-Scheibe 13 in Anlage kommt. Das kleinste Ritzel 17 stellt ein Ringelement 2 mit radial nach außen vorstehenden Ritzelzähnen 11 dar und weist erste Rändelelemente 5 auf.

Beim Vorgang des Umlegens der Antriebskette vom kleinsten Ritzel 17 auf das benachbarte größere Einzelritzel am Ritzelpaket 1 zum Zweck des Gangumschaltens ist eine definierte Zuordnung zwischen den jeweiligen Ritzelzähnen 11 in Hinsicht auf ihre relative Winkelposition um die Drehachse des Antreibers von entscheidender Bedeutung für den Umlegevorgang. In diese relative Winkelposition gehen ein, wie sowohl das Ritzelpaket 1, als auch das kleinste Ritzel 17 winkelmäßig zum Antreiber orientiert sind. Der Vorteil einer genauen winkelmäßigen Zuordnung, wie er zwischen den Einzelritzeln am Ritzelpaket 1 existiert, besteht hier nicht.

Auch ist der Durchmesser des kleinsten Ritzels 17 und damit die Zähnezahl durch den Außendurchmesser des Antreibers nach unten begrenzt.

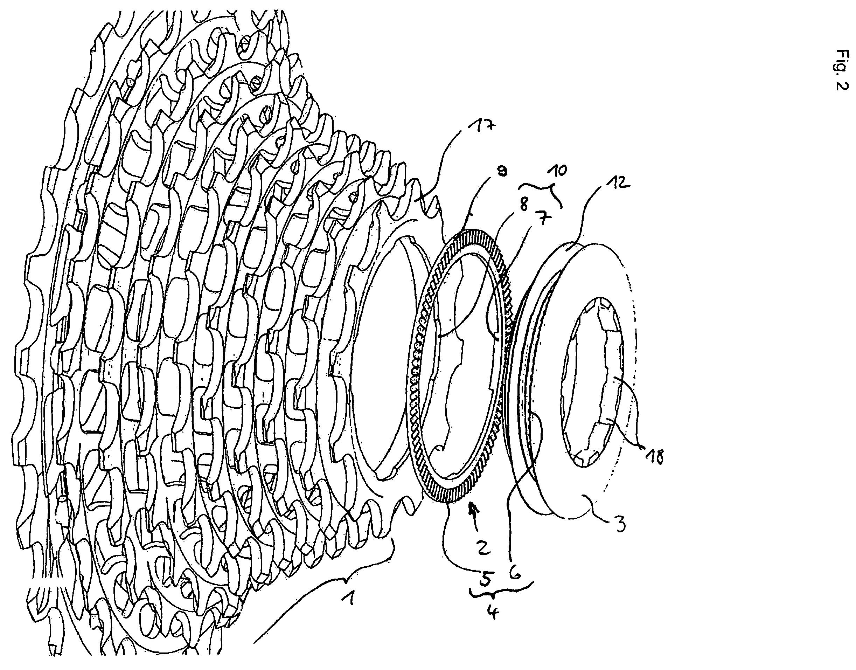

Die Fig. 2 zeigt eine Anordnung von einem Ritzelpaket 1, einem Ringelement 2 und einem Gewindeelement 3 für eine Montage auf dem Antreiber an einer Fahrrad-Hinterradnabe. Das Ritzelpaket 1 ist mittels spanabhebender Verfahren, wie Drehen und Fräsen, einstückig hergestellt und beinhaltet auch das kleinste Ritzel 17. Die Integration des kleinsten Ritzels 17 ist deshalb besonders vorteilhaft, weil dadurch auch sehr kleine Zähnezahlen realisiert werden können. Andernfalls stellt ein kleines separates Ritzel, insbesondere bei sehr kleinen Zähnezahlen eine sehr grazile Konstruktion dar, weil am Innenumfang Mitnahmeelemente zum Antreiber oder anders geartete Koppelelemente vorgesehen werden müssen, die dem Durchmesser des Antreibers entsprechen müssen. Die Zähnezahl 11 stellt deshalb bei gängigen Durchmesserverhältnissen eine Grenze der Machbarkeit dar.

Durch ein Gewindeelement 3 mit zweiten Rändelelementen 6 werden das Ritzelpaket 1 mit dem kleinsten Ritzel 17 und ein Ringelement 2 einer axialen Kraft ausgesetzt und gegeneinander verspannt. Die ersten Rändelelemente 5 am Ringelement 2 greifen in die Zwischenräume zwischen zweiten Rändelelementen 6 am Gewindeelement 3 ein, um ein Losdrehen des Gewindeelementes 3 zu verhindern. Im gezeigten Ausführungsbeispiel ist im axialen Raum zwischen ersten Rändelelementen 5 und zweiten Rändelelementen 6 noch eine Federscheibe 12 angeordnet, die entsprechend der Rändelelemente in axialer Richtung durchgebogen wird und die arretierende Wirkung der Rändelelemente 5, 6 abmindert. Die Federscheibe 12 kann infolge der in axialer Richtung vorliegenden Flexibilität des Ritzelpaketes 1 auch entfallen. Dem Eingriff eines Werkzeuges dienen Werkzeugflächen 18 an der inneren Peripherie des Gewindeelementes 3.

Das Gewindeelement 3 ist mit seinem Außengewinde im Innengewinde am Antreiber eingeschraubt. Bei entsprechenden Durchmesserverhältnissen könnte am Gewindeelement 3 auch ein Innengewinde vorgesehen werden, zum Aufschrauben auf einem Außengewinde am Antreiber.

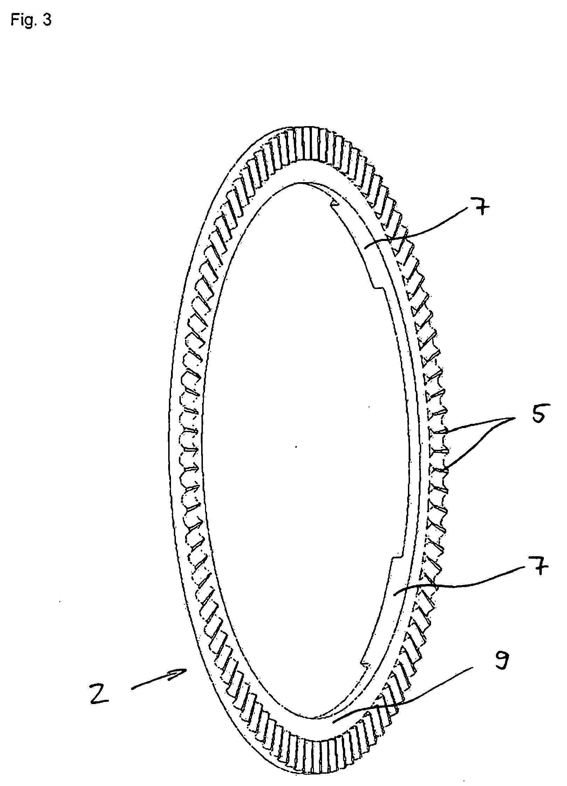

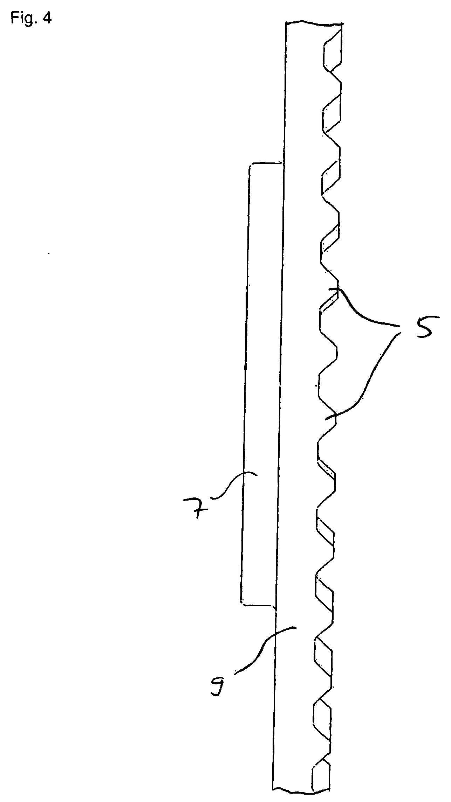

Die Figur 3 zeigt das komplette Ringelement 2, und die Figur 4 Details davon. Von einem scheibenförmigen Grundkörper 9 stehen erste Drehbegrenzer 7 in axialer Richtung vor. Sie sind im montierten Zustand mit zweiten Drehbegrenzern 8 am Ritzelpaket 1 in Eingriff und verhindern ein Verdrehen des Ringelementes 2 gegenüber dem Ritzelpaket 1, was beim Festziehen der Befestigungsschraube 3 notwendig ist. Die Drehbegrenzer 8 als Ausnehmungen im Ritzelpaket 1 sind einfach bei der Herstellung des Ritzelpaketes 1 mit einzubringen. Als Alternative wären auch vorstehende Formelemente denkbar.

Die große Anzahl von filigran, aber notwendigerweise genau zu fertigenden ersten Rändelelemente 5 am Ringelement 2 macht deutlich, dass eine Herstellung mit spanabhebenden Fertigungsverfahren einen großen Aufwand bedeutet. Dieses Problem wird erfindungsgemäß mit dem Vorsehen eines separaten, gegenüber dem Ritzelpaket 1 nicht verdrehbaren Ringelement 2 gelöst, für das andere, günstigere Herstellverfahren in Frage kommen, wie zum Beispiel durch Ausstanzen und Prägen. Es hat sich gezeigt, dass der mit dem Anordnen von ersten und zweiten Drehbegrenzern 6, 7 zusätzlich entstehende Aufwand vergleichsweise geringer ist.

### Bezugszeichen

- 1: Ritzelpaket
- 2: Ringelement
- 3: Gewindeelement
- 4: Rändelverzahnung
- 5: erstes Rändelelement
- 6: zweites Rändelelement
- 7: erster Drehbegrenzer
- 8: zweiter Drehbegrenzer
- 9: scheibenförmiger Grundkörper
- 10: Drehbegrenzungsvorrichtung
- 11: Ritzelzahn
- 12: Federscheibe
- 13: Abschluss-Scheibe
- 14: Distanzhülse
- 15: Eingriffsvorsprung
- 16: Eingriffsstift
- 17: kleinstes Ritzel
- 18: Werkzeugflächen

## Patentansprüche

1. Befestigungseinrichtung für das Befestigen eines Ritzelpaketes (1) auf dem Antreiber an einer Fahrrad-Hinterradnabe eines Fahrrades;
mit dem Ritzelpaket (1), einem Ringelement (2) und einem Gewindeelement (3), sowie mit ersten Rändelelementen (5) am Ringelement (2) und zweiten Rändelelementen 6 am Gewindeelement (3), wobei die Rändelelemente (5, 6) gemeinsam eine Rändelverzahnung (4) bilden;
wobei das Ritzelpaket (1) und das Ringelement (2) in axialer Richtung durch das Gewindeelement (3) gegeneinander verspannt sind;
wobei zwischen dem Ringelement (2) und dem Ritzelpaket (1) eine Drehbegrenzungsvorrichtung (10) vorgesehen ist, die aus einem ersten Drehbegrenzer (7) am Ringelement (2) und aus einem zweiten Drehbegrenzer (8) am Ritzelpaket (1) besteht, die ineinander greifen und die Verdrehmöglichkeit zwischen Ringelement (2) und Ritzelpaket(1) begrenzen; **dadurch gekennzeichnet dass** weiterhin ein kleinstes Ritzel (17) mit dem Ritzelpaket (1) einstückig verbunden ist.

2. Befestigungseinrichtung nach Anspruch 1,
**dadurch gekennzeichnet,**
**dass** das Ringelement (2) einen scheibenförmigen Grundkörper (9) aufweist und dass der erste Drehbegrenzer (7) gegenüber dem scheibenförmigen Grundkörper (9) axial vorsteht.

3. Befestigungseinrichtung nach Anspruch 1,
**dadurch gekennzeichnet,**
**dass** das Ritzelpaket (1) eine Abschluss-Scheibe (13) aufweist.

## Claims

1. Fastening device for fastening a sprocket assembly (1) on the driver on a bicycle rear wheel hub of a bicycle;
with the sprocket assembly (1), a ring element (2) and a threaded element (3), and with first knurled elements (5) on the ring element (2) and second knurled elements (6) on the threaded element (3), the knurled elements (5, 6) together forming a knurled toothing system (4); the sprocket assembly (1) and the ring element (2) being braced against one another in the axial direction by way of the threaded element (3);
a rotation limiting apparatus (10) being provided between the ring element (2) and the sprocket assembly (1), which rotation limiting apparatus (10) consists of a first rotation limiter (7) on the ring element (2) and of a second rotation limiter (8) on the sprocket assembly (1), which rotation limiters engage into one another and limit the rotation capability between the ring element (2) and the sprocket assembly (1); **characterized in that**, furthermore, a smallest sprocket (17) is connected in one piece to the sprocket assembly (1).

2. Fastening device according to Claim 1, **characterized in that** the ring element (2) has a disc-shaped main body (9), and **in that** the first rotation limiter (7) projects axially with respect to the disc-shaped main body (9).

3. Fastening device according to Claim 1, **characterized in that** the sprocket assembly (1) has a closure disc (13).

## Revendications

1. Dispositif de fixation pour fixer une cassette de pignons (1) sur l'entraîneur au niveau d'un moyeu de roue arrière de bicyclette d'une bicyclette ; comprenant la cassette de pignons (1), un élément de bague (2) et un élément fileté (3), et avec des premiers éléments moletés (5) sur l'élément de bague (2) et des deuxièmes éléments moletés (6) sur l'élément fileté (3), les éléments moletés (5, 6) formant ensemble une denture moletée (4) ;
la cassette de pignons (1) et l'élément de bague (2) étant serrés l'un contre l'autre dans la direction axiale par l'élément fileté (3) ;
entre l'élément de bague (2) et la cassette de pignons (1) étant prévu un dispositif de limitation de la rotation (10) qui se compose d'un premier limiteur de rotation (7) au niveau de l'élément de bague (2) et d'un deuxième limiteur de rotation (8) au niveau de la cassette de pignons (1), lesquels s'engagent l'un dans l'autre et limitent la capacité de rotation entre l'élément de base (2) et la cassette de pignons (1) ;
**caractérisé en ce**
**qu'**un plus petit pignon (17) est en outre connecté d'une seule pièce avec la cassette de pignons (1).

2. Dispositif de fixation selon la revendication 1,
**caractérisé en ce que**
l'élément de bague (2) présente un corps de base en forme de disque (9) et le premier limiteur de rotation (7) fait saillie axialement par rapport au corps de base en forme de disque (9).

3. Dispositif de fixation selon la revendication 1,
**caractérisé en ce que**
la cassette de pignons (1) présente un disque de fermeture (13).
